Europäisches Patentamt

European Patent Office

Office européen des brevets

(11) Publication number: **0 186 214 B1**

# EUROPEAN PATENT SPECIFICATION

(45) Date of publication of patent specification: **28.11.90**

(51) Int. Cl.⁵: **H 04 M 19/00**

(21) Application number: **85116620.7**

(22) Date of filing: **27.12.85**

(54) Battery-feed circuit for exchange.

(30) Priority: **27.12.84 JP 273830/84**

(43) Date of publication of application:
**02.07.86 Bulletin 86/27**

(45) Publication of the grant of the patent:
**28.11.90 Bulletin 90/48**

(84) Designated Contracting States:
**DE FR GB**

(56) References cited:
**EP-A-0 116 767**
**US-A-4 071 879**

**PATENT ABSTRACTS OF JAPAN, unexamined applications, field E, vol. 8, no. 206, September 20, 1984, The Patent Office Japanese Government, page 20 E 267**

(73) Proprietor: **FUJITSU LIMITED**
**1015, Kamikodanaka Nakahara-ku**
**Kawasaki-shi Kanagawa 211 (JP)**

(72) Inventor: **Kawami, Shigeru**
**Tanaka-so 6 663, Kamikodanaka Nakahara-ku**
**Kawasaki-Shi Kanagawa 211 (JP)**
Inventor: **Tabu, Takashi**
**1-26-17, Ookayama**
**Meguro-ku Tokyo 152 (JP)**
Inventor: **Sano, Shigeo**
**Eiji-kopo 102 123, Miyazaki Miyamae-ku**
**Kawasaki-shi Kanagawa 213 (JP)**
Inventor: **Masuda, Nobuyuki**
**950-10, Chitose Takatsu-ku**
**Kawasaki-shi Kanagawa 211 (JP)**

(74) Representative: **Eitle, Werner, Dipl.-Ing. et al**
**Hoffmann, Eitle & Partner Patentanwälte**
**Arabellastrasse 4**
**D-8000 München 81 (DE)**

**Description**

Background of the Invention

1. Field of the Invention

The present invention relates to an internal-termination type polarity-reversal battery-fed circuit for supplying a speech current or supervision current to a subscriber line or trunk line of an exchange.

The battery-feed circuit according to the present invention not only functions to supply speech current for a subscriber or trunk line, transmit a voice signal to the line, and terminate the voice signal from the line, but also to send a polarity-reversal line signal.

2. Description of the Related Art

An exchange is equipped with a battery-feed circuit for supplying a speech current to telephone sets. The main functions needed for this battery-feed circuit are as follows:

(i) Supply of the speech current and/or the supervision current;

(ii) Transmission of voice signals to the speech line and the reception thereof from the speech line;

(iii) Termination of the speech line for the received voice signal;

(iv) Transmission of the polarity-reversal signal, etc.

This battery-feed circuit of prior art requires separate circuits for each of these functions, therefore requires many components, which enlarges the battery-feed circuit, complicates it, and raises its cost. Further, one of its components, an electronic inductor circuit has a high impedance against a common mode signal (a longitudinal signal), so cannot terminate an undesirable common mode signal in the speech line to the ground with a low resistance. Further, when noiseless polarity reverse is required, an LC filter circuit is needed, which has the disadvantages of the increased weight and poorer packing density. The capacitance and inductance element in the LC filter circuit make it difficult to constitute the battery-feed circuit by an integrated circuit.

US—A—4 07 18 79 describes an apparatus for producing a reversible local battery current to provide metering pulses on a two-wire telephone trunk circuit. A DC current supply produces a current of one polarity which is increased from zero to 20 milliamps over a period of 75 milliseconds by charging a capacitor and decreased from 20 milliamps to zero also over a period of 75 milliseconds by discharging the capacitor. The DC current supply is coupled to the trunk circuit by way of a polarity reversing bridge. In response to a control signal initiating a metering pulse, control circuitry causes the capacitor to discharge, gradually reducing the DC current through the trunk circuit to zero. When the current reaches zero, the control circuitry causes the polarity reversing bridge to reverse the connections of the DC current supply to the trunk circuit. At the same time the capacitor charges, gradually increasing the DC current through the trunk circuit. Since the polarity of the bridge has been reversed, current flow in the trunk circuit and also the potential is opposite to the original direction. Thus, current flow in the trunk circuit is varied gradually from 20 milliamps in one direction to 20 milliamps in the opposite direction. When the control signal terminates, the apparatus operates to change the current flow in the trunk circuit gradually to 20 milliamps in the original direction.

EP—A—0 11 67 67 describes a battery-feed circuit for a two wire telephone subscriber line having first and second operational amplifiers, output resistors, a DC voltage feedback loop and a switching power supply. The switching power supply controls a power source voltage of the first operational amplifier in dependence upon length of the subscriber line loop and the state of the telephone set (on-hook or off-hook) on the line. That power source voltage is held lower than the output voltage of the first operational amplifier thereby power loss in that amplifier can be reduced to a level such that the amplifier can be fabricated on an IC.

Summary of the Invention

Accordingly, it is an object of the present invention to provide an improved battery-feed circuit which can be given the above-described functions with a compact construction.

The above object is solved in accordance with the invention by a battery-feed circuit for an exchange, wherein an alternating-current signal appearing between first and second lines is fed back to first and second reference resistances provided for each of the first and second lines through a differential amplifying path by means of alternating-current feedback; and direct current voltage on the first line is fed back through the first reference resistance by means of direct current feedback; characterised in that direct current voltage on the second line is fed back independently of the first line through the second reference resistance by means of a direct-current feedback for providing a desired alternating-current terminating resistance and a desired direct-current resistance independently on each line.

According to a further aspect of the invention, a battery-feed circuit for an exchange is provided comprising: a first reference resistance connected to a first line; a second reference resistance connected to a second line; a first amplifier for supplying a speech current for the first line, a first capacitance for coupling the second line and a second input of the first amplifier; characterized by a first terminal of said first amplifier being led to the first line; a second amplifier for supplying the speech current for the second line, a first input terminal of which is led to the second line; and a second capacitance for coupling the first line and a second input terminal of the second amplifier.

According to this fundamental aspect of the present invention, there is provided a battery-feed circuit for an exchange comprising; a first reference resistance connected to a first line; a second reference resistance connected to a second line; a first amplifier with unity gain and summation function for supplying a speech current and voice signal to the first line, the input terminal of which is led to a first direct-current (dc) amplifier, an alternative-current (ac) differential amplifier and a voice signal source; the first direct-current (dc) amplifier with appropriate dc gain and summation function, the input terminal of which is led to the first line and dc control signal generating circuit; the ac differential amplifier with appropriate ac gain, the input terminal of which is led to the first line and a second line via coupling capacitors; a second amplifier with unity gain and summation function for supplying a speech current and voice signal to the second line, the input terminal of which is led to a second direct-current (dc) amplifier, the alternative-current (ac) differential amplifier and the voice signal source; and the second direct-current (dc) amplifier with appropriate dc gain and summation function, the input terminal of which is led to the second line.

Brief Description of the Drawings

Embodiments of the battery-feed circuit for the exchange in accordance with the present invention will be described with reference to the accompanying drawings, in which:

Fig. 1 a circuit diagram of a battery-feed circuit of the prior art;

Fig. 2 is a circuit diagram of a battery-feed circuit according to one embodiment of the present invention;

Fig. 3 shows one example of a waveform of a polarity-reversal control signal for sending a noiseless polarity-reversal signal from the Fig. 2 circuit;

Fig. 4 is a circuit diagrams of battery-feed circuits according to other embodiment of the present invention; and

Fig. 5 and Fig. 6 are block diagrams of fundamental configurations of a battery-feed circuit according to the present invention.

Description of the Preferred Embodiments

Before describing the preferred embodiments, a prior art battery-feed circuit will be illustrated for reference purposes.

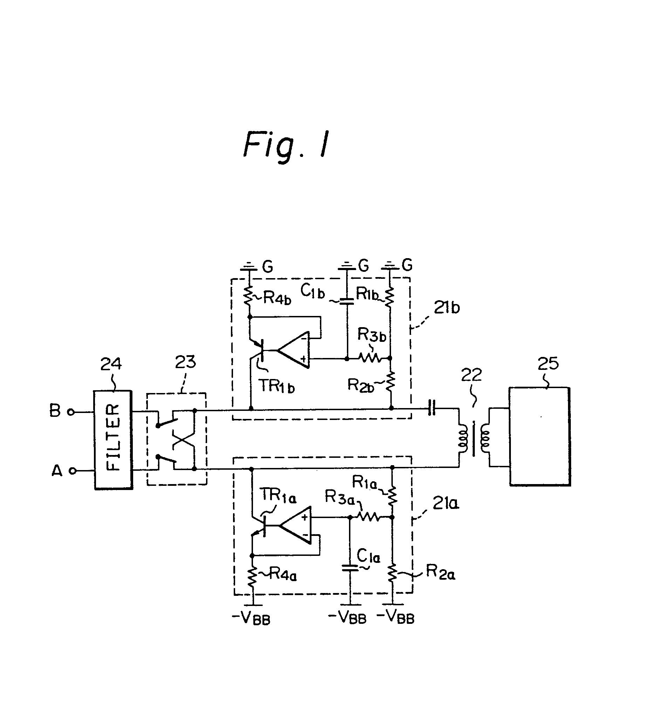

A polarity-reversal type battery-feed circuit of the prior art is shown in Fig. 1. In Fig. 1, 21a and 21b are electronic inductor circuits, 22 a transformer 23 contacts of a polarity-reversal relay, 24 a filter circuit, and A and B two wires connected to a telephone set.

This battery-feed circuit has separate circuits for each of its functions. That is, the electronic inductor circuits 21a and 21b function to supply the speech current and/or the supervision current. Namely, the speech path current flows from the ground G through a resistor $R_{4b}$ and a transistor $TR_{1b}$ to the line B and back from line A through a transistor $TR_{1a}$ and a resistor $R_{4a}$ to power supply source $-V_{BB}$. The value of the speech current is decided by the ratio of resistors $R_{1b}$ and $R_{2b}$ (also, that of resistors $R_{1a}$ and $R_{2b}$).

The transformer 22 has the function of transmission/reception of the voice signal to/from the speech line as well as that of termination of the speech line for the voice signal. The polarity-reversal relay 23 has the function of sending the polarity-reversal signal. The filter circuit 24 is used for a noiseless polarity reverse and is added when the battery-feed circuit is adapted to public telephones requiring noiseless polarity reverse for charging signal.

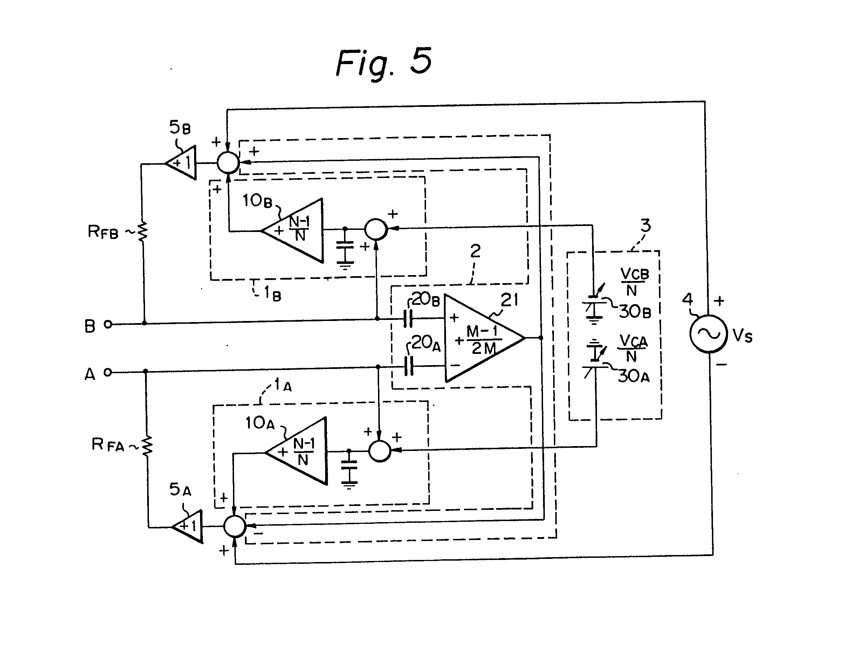

Figure 5 shows a block diagram of a fundamental configuration of the present invention. In Fig. 5, an A line and a B line are connected to a subscriber line or a trunk line. The battery-feed circuit of Fig. 5 realizes the ac feedback function for the ac signal on the A and B lines and the dc feedback function for the dc voltage on the A and B lines individually by a pair of a dc feedback circuit and an ac feedback circuit.

That is, in Fig. 5, the battery-feed circuit comprises dc feedback circuits $1_A$ and $1_B$, each of which includes an amplifier ($10_A$ or $10_B$) having an amplification factor

$$\frac{N-1}{N}$$

an ac feedback circuit 2 including two capacitors $20_A$ and $20_B$ and an amplifier 21 having the amplification factor

$$\frac{M-1}{2M}$$

a polarity-reversal control signal generating circuit 3 including variable voltage sources $30_A$ and $30_B$, a generator 4 for sending the sound signal to the subscriber line, two buffer amplifiers $5_A$ and $5_B$ having an amplification factor $+1$, and two feeding resistors (or reference resistors) $R_{FA}$ and $R_{FB}$.

The number N of the dc feedback circuit and the number M of the ac feedback circuit are constants for determining the dc equivalent feeding resistance $R_{EF}$ and the ac terminating resistance $R_{DT}$. The relationships between them are as follows.

3

$$R_{EF} = R_F \times N$$
$$R_{DT} = R_F \times M \times 2$$

where, $R_F$ is the resistance of the feeding resistors $R_{FA}$ and $R_{FB}$.

The characteristics of the Fig. 5 circuit are as follows.

First, in this circuit, the desired dc equivalent feeding resistance $R_{EF}$ and the desired ac terminating resistance $R_{DT}$ are obtained by means of effecting the dc positive feedback and ac positive feedback to the feeding resistors $R_{FA}$ and $R_{FB}$ so as to control the equivalent dc resistance and ac resistance of the feeding resistors.

Second, two dc feedback circuits are provided independently for each of the A and B lines. Due to this constitution, the power supply voltage of the operational amplifier used in the circuit may be lowered. As a result, there exist the merits that no operational amplifier proof against high voltage is needed and the application to booster lines becomes possible.

Third, transmission of a response signal, charging signal, etc. is possible, since the voltage on the A and B lines may be controlled by the polarity-reversal control signal.

Fourth, the ac signal on the A and B lines is differentially amplified, whereby the differential signal, i.e., the voice signal, and the common mode signal, i.e., the undesired induced signal, are distinguished from each other. Accordingly, the terminating resistance for each signal can be made different by changing the feedback ratios of the feeding resistor between both signals. As a result, the common mode signal undesirable for the battery-feed circuit may be terminated with a low resistance, that is, the feeding resistors $R_{FA}$ and $R_{FB}$, and the voice signal may be terminated with the terminating resistance $R_{DT}$.

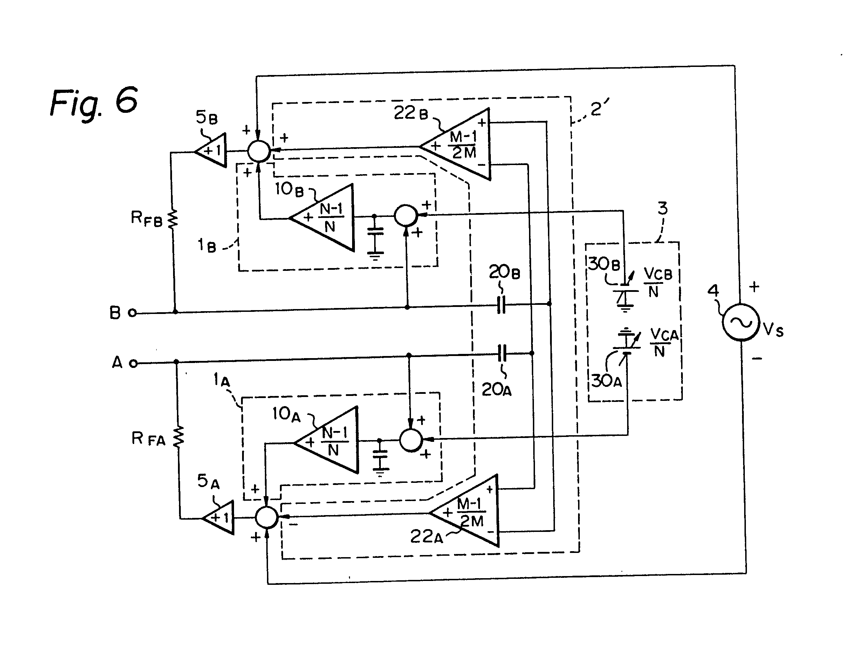

Figure 6 shows a block diagram of modified configuration of Fig. 5 according to the present invention. In this configuration, the ac feedback circuit 2' is different from that of Fig. 5. Namely, in Fig. 6, the ac feedback circuit 2' comprises two operational amplifiers $22_A$ and $22_B$ provided for the A and B lines.

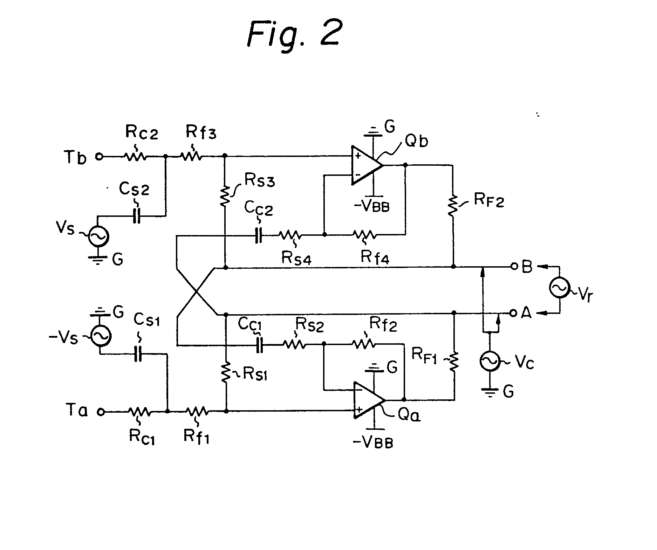

Fig. 2 shows an embodiment derived from the fundamental configuration shown in Fig. 5 according to the present invention. In Fig. 2, an A line and a B line are connected to a subscriber line or a trunk line. A received voice signal $V_r$ is input to the A and B lines. This battery-feed circuit of Fig. 2 is constituted symmetrically in the up and down direction in Fig. 2 by a feeding circuit for the A line and a feeding circuit for the B line.

An operational amplifier $Q_a$ whose output terminal is connected to the A line via a feeding resistor (or reference resistor) $R_{F1}$ is able to supply the speech current to the A line. An A line control voltage is applied to a noninverting input terminal of the operational amplifier $Q_a$ via a terminal $T_a$ and two resistors $R_{c1}$ and $R_{f1}$. A sending voice signal $V_s$ is applied to the connection point of the resistors $R_{c1}$ and $R_{f1}$ via a capacitor $C_{s1}$.

The A line is connected to the noninverting input terminal of the operational amplifier $Q_a$, and the B line is connected to an inverting input terminal thereof via a capacitor $C_{c1}$ and a resistor $C_{s2}$. A feedback resistor $R_{f2}$ is connected between the inverting input terminal and an output terminal of the operational amplifier $Q_a$.

The constitution of the feeding circuit for the B line is the same. This feeding circuit includes an operational amplifier $Q_b$, a feeding resistor $R_{F2}$, five resistors $R_{c2}$, $R_{f3}$, $R_{f4}$, $R_{s3}$, and $R_{s4}$, and two capacitors $C_{s2}$ and $C_{c2}$. The difference is that, in the feeding circuit for the B line, the B line is connected to a noninverting input terminal of the operational amplifier $Q_b$ via the resistor $R_{s3}$, while the A line is connected to an inverting input terminal thereof via the capacitor $C_{c2}$ and the resistor $R_{s4}$. A teminal $T_b$ is provided for receiving a B line control voltage.

The relationship of the values of the parts in this battery-feed circuit are as follows.

$$R_{c1}, R_{c2} = R_c$$
$$R_{s1} \text{ to } R_{s4} = R_s$$
$$R_{f1} \text{ to } R_{f4} = R_f$$
$$R_{F1}, R_{F2} = R_F$$
$$C_{s1}, C_{s2} = C_s$$
$$C_{c1}, C_{c2} = C_c$$

These values of the resistors and the capacitors are selected so that, as described hereinafter in more detail, for example, a terminating resistance $R_{DT}$ for the received voice signal $V_r$ is 600$\Omega$, an equivalent feeding resistance $R_{EF}$ is 200$\Omega$, and a resistance to ground for the induced common mode signal is 50$\Omega$.

The mode of operation of the Fig. 2 circuit will now be described.

The terminating resistance $R_{DT}$ for terminating the voice signal $V_r$ received from the speech line, the equivalent feeding resistance $R_{EF}$, seen from the power source to the speech line, for supplying the speech current or the supervision current to the speech line, the terminating resistance $R_{CT}$ (or the ground resistance) for the induced common mode signal $V_c$, etc. are, in general, set at certain nominal values according to the exchange system. Accordingly, the battery-feed circuit of Fig. 2 must be designed to realize these nominal values. In this example, the battery-feed circuit is designed, for example, so that the terminating resistance $R_{DT}$ becomes 600$\Omega$, the equivalent feeding resistance $R_{EF}$ becomes 200$\Omega$, and the terminating resistance $R_{CT}$ becomes 50$\Omega$.

First, with regard to the reception and termination of the voice signal $V_r$ received from the speech path line, the present battery-feed circuit feeds back the received voice signal $V_r$ to the feeding resistors $R_{F1}$ and $R_{F2}$ by means of the positive feedback so as to realize the desired terminating resistance $R_{DT}$ (600Ω), in spite of using the feeding resistrs $R_{F1}$ and $R_{F2}$ having a low resistance (50Ω).

Namely, the impedances of the capacitors $C_{c1}$, $C_{c2}$, $C_{s1}$, and $C_{s2}$ are negligible in comparison with the resistors $R_s$ and $R_f$, since the impedance thereof with respect to the signal frequency of the received voice signal $V_r$ is small enough. Accordingly, the operational amplifiers $Q_a$ and $Q_b$ operate as a positive phase amplifier circuit with respect to the received voice signal $V_r$, whereby a part of the received voice signal $V_r$ is fed back to the feeding resistors $R_{F1}$ and $R_{F2}$ in positive phase. As a result, the terminating resistance $R_{DT}$ for the received voice signal $V_r$ becomes greater than the feeding resistance $R_F$. The terminating resistance $T_{DT}$ is expressed as follows.

$$R_{DT} = \frac{2R_F \cdot R_s}{R_s - 2R_f} \qquad \ldots (1)$$

As clear from expression (1), the terminating resistance $R_{DT}$ is greater than the feeding resistance $R_F$. If $R_{DT}$ and $R_F$ are given, the $R_s$ and $R_f$ may be decided on the basis of expression (1).

Next, in order to increase the tolerance against the common mode signal on the speech line, such as the undesired induced current, the battery-feed circuit of the present invention does not feed back the common mode signal $V_c$ to the feeding resistors $R_{F1}$ and $R_{F2}$, so the common mode signal $V_c$ is grounded via the feeding resistors $R_{F1}$ and $R_{F2}$. Accordingly, the low-resistance feeding resistors $R_{F1}$ and $R_{F2}$ become exactly the ground terminating resistance $R_{CF}$.

Namely, if the impedance of the capacitors $C_{c1}$ and $C_{c2}$ is negligible in comparison with the resistance $R_s$ and $R_f$ with respect to the comon mode induced signal $V_c$ applied to the A and B line, each circuit containing the operational amplifiers $Q_a$ and $Q_b$ operates as a differential amplifier circuit, the input common mode signal $V_c$ being cancelled at each differential amplifier circuit. Accordingly, output signals corresponding to the common mode induced signal $V_c$ do not appear at each output terminal of the operational amplifiers $Q_a$ and $Q_b$.

As a result, the common mode induced signal $V_c$ in effect is the same as grounded via the feeding resistors $R_{F1}$ and $R_{F2}$. The terminating resistance $R_{CF}$ for the common mode signal induced signal $V_c$ is expressed as follows:

$$R_{CF} = R_F \qquad \ldots (2)$$

Accordingly, if $R_F$ is 50Ω, the common mode induced signal $V_c$ is terminated to the ground by 50Ω. Hence, the tolerance against the common mode signal, such as the induced current, is raised due to this low ground terminating resistance.

Next, with regard to the feeding resistance for supplying the current to the A and B lines, in the present battery-feed circuit, the direct-current (dc) voltage on the speech line is fed back to the feeding resistors by means of dc positive feedback, thereby the desired equivalent feeding resistance (for example, 200Ω) is obtained in spite of using feeding resistors having a lower resistance (for example, 50Ω).

Namely, since the dc feedback loop of the operational amplifiers $Q_a$ and $Q_b$ are opened due to the capacitors $C_{c1}$ and $C_{c2}$, the operational amplifiers $Q_a$ and $Q_b$ function as a voltage follower circuit with respect to the dc voltage. Accordingly, the output voltages of the operational amplifiers $Q_a$ and $Q_b$ are equal to the input voltage applied to the noninverting input terminals thereof. In this case, the equivalent feeding resistance $R_{EFA}$ for the A line and the equivalent feeding resistance $R_{EFB}$ for the B line are expressed as follows.

$$R_{EFA} = R_{EFB} = \frac{R_F \cdot (R_s + R_f + R_c)}{R_s} \qquad \ldots (3)$$

Since these equivalent feeding resistances $R_{EFA}$ and $R_{EFB}$ are calculated based on the voltage of the terminals $T_a$ and $T_b$, the voltage on the A and B lines may be changed by changing the control voltage applied to the terminals $T_a$ and $T_b$ while keeping the equivalent feeding resistances $R_{EFA}$ and $R_{EFB}$ constant.

Accordingly, the present battery-feed circuit can send a polarity-reversal signal by changing the voltage on the terminals $T_a$ and $T_b$. That is, the polarity of the voltage on the A and B lines is reversed according to the reverse of the polarity of the voltage on the terminals $T_a$ and $T_b$, whereby the polarity-reversal signal is sent to the speech line. In this case, the characteristics during the polarity reverse are quite the same as those under normal polarity, since the supply circuits of the A and B lines are constituted completely symmetrically.

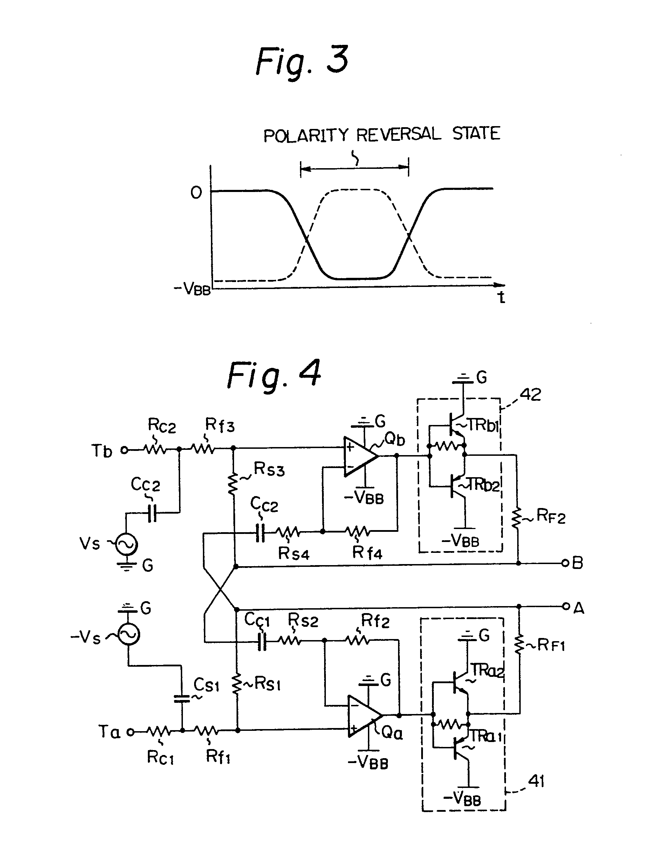

This means that a noiseless polarity-reversal signal may be easily sent by applying the smooth polarity reversal control voltage shown, for example, in Fig. 3 to the terminals $T_a$ and $T_b$. Figure 3 shows one example of the control voltage waveforms on the terminal $T_a$ and $T_b$. In Fig. 3, the abscissa represents the voltage level on the terminals $T_a$ and $T_b$, the ordinate represents the time, broken line is the voltage waveform on the terminal $T_a$, and the solid line is the voltage waveform on the terminal $T_b$.

Finally, the transmission of the voice signal to the A and B lines will be explained. The sending voice signals $V_s$ are input to the noninverting input terminals of the operational amplifiers $Q_a$, $Q_b$ via the capacitors $C_{s1}$, $C_{s2}$, and of the resistors $R_{f1}$, $R_{f3}$. When the impedances of the capacitors $C_{s1}$, $C_{s2}$, $C_{c1}$, and $C_{c2}l$ are small enough with respect to the frequency of the sending voice signal $V_s$ in comparison with other resistors and may be neglected, the sending voice signal voltage $V_t$ appearing across the load resistor $R_e$ between the A and B line is expressed as follows:

$$V_t = V_s \times \frac{2R_e}{2R_F + \dfrac{R_s - 2R_F}{R_s} \times R_e} \qquad \ldots (4)$$

If the voice signal voltage $V_t$ to be sent and each resistance of the resistor are given, the value of the voice signal voltage $V_s$ is to be input is determined from expression (4).

Although preferred embodiments have been described heretofore, various modifications and alterations are possible within the scope of the present invention. Figure 4 shows such another embodiment according to the present invention. In the battery-feed circuit of Fig. 2, if the speech current or the supervision current supplied from the battery-feed circuit is great, it it not possible to supply whole current from the operational amplifiers $Q_a$ and $Q_b$. The circuit of Fig. 4 is improved so as to be able to supply a greater current by using a power booster. In Fig. 4, the output voltage of the operational amplifier $Q_a$ is applied to the feeding resistor $R_{F1}$ via a power booster circuit 41 comprising a PNP type transistor $TR_{a1}$ and an NPN type transistor $TR_{a2}$. In the same way, the output voltage of the operational amplifier $Q_b$ is applied to the feeding resistor $R_{F2}$ via a power booster circuit 42, whereby the current supply to the A and B lines is effected.

**Claims**

1. A battery-feed circuit for an exchange, wherein an alternating-current signal appearing between first and second lines (A, B) is fed back to first and second reference resistances ($R_{F1}$, $R_{F2}$; $R_{FA}$, $R_{FB}$) provided for each of the first and second lines (A, B) through a differential amplifying path ($Q_a$, $Q_b$; 21, $5_A$, $5_B$; $22_A$, $22_B$, $5_A$, $5_B$) by means of alternating-current feedback; and

direct current voltage on the first line (A) is fed back through the first reference resistance ($R_{F1}$; $R_{FA}$) by means of direct current feedback;

characterized in that direct current voltage on the second line (B) is fed back independently of the first line (A) through the second reference resistance ($R_{F2}$, $R_{FB}$) by means of direct-current feedback for providing a desired alternating-current terminating resistance and a desired direct-current resistance independently on each line.

2. A battery-feed circuit according to claim 1, wherein said direct-current feedback is effected by first and second direct-current feedback circuits provided for each of the first and second lines (A, B).

3. A battery-feed circuit according to claim 1, wherein said alternating-current feedback is effected by one differential amplifier (21) provided commonly for the first and second lines (A, B).

4. A battery-feed circuit according to claim 1, wherein said alternating-current feedback is effected by first and second differential amplifiers ($Q_a$, $Q_b$; $22_A$, $22_B$) provided for each of the first and second lines (A, B).

5. A battery-feed circuit according to claim 1, wherein the circuit further comprises first and second polarity-reversal control circuits ($30_A$, $30_B$) for inputting a polarity-reversal control signal to the first and second direct-current feedback circuits, whereby the circuit is capable of sending the polarity-reversal signal to the first and second lines (A, B).

6. A battery-feed circuit according to claim 5, wherein the circuit is capable of sending a noiseless polarity-reversal signal by inverting smoothly the polarity of the first and second polarity-reversal control signals.

7. A battery-feed circuit according to claim 1, wherein the circuit further comprises a circuit ($V_s$) for supplying a sending voice signal for the first and second reference resistances, whereby the circuit is capable of sending the voice signal to the first and second lines (A, B).

8. A battery-feed circuit according to claim 1, wherein said alternating-current feedback and said direct-current feedback are effected by a pair of operational amplifiers ($Q_a$, $Q_b$; $22_A$, $22_B$) provided for the first and second lines.

9. A battery-feed circuit according to claim 5, wherein said alternating-current feedback, said direct-current feedback and said polarity-reversal control are effected by a pair of operational amplifiers ($Q_a$, $Q_b$) provided for the first and second lines.

10. A battery-feed circuit for an exchange comprising:

a first reference resistance ($R_{F1}$, $R_{FA}$) connected to a first line (A);

a second reference resistance ($R_{F2}$, $R_{FB}$) connected to a second line (B);

a first amplifier ($Q_a$, $22_A$) for supplying a speech current for the first line (A),

a first capacitance ($C_{c1}$; $20_A$) for coupling the second line (B) and a second input terminal of the first amplifier ($Q_a$; $22_A$);

characterized by a first terminal of said first amplifier ($Q_a$, $22_A$) being led to the first line (A);

a second amplifier ($Q_b$; $22_B$) for supplying the speech current for the second line (B), a first input terminal of which is led to the second line (B); and

a second capacitance ($C_{c2}$; $20_B$) for coupling the first line (A) and a second input terminal of the second amplifier ($Q_b$; $22_B$).

11. A battery-feed circuit according to claim 10, wherein said first and second amplifiers ($Q_A$, $Q_B$; $22_A$, $22_B$) are operational amplifiers.

12. A battery-feed circuit according to claim 10, wherein said first input terminals of first and second amplifiers ($Q_a$, $Q_b$); $22_A$, $22_B$) are non-inverting input terminals and said second input terminals thereof are inverting input terminals.

13. A battery-feed circuit according to claim 12, wherein the circuit is constituted so that the first and second amplifiers ($Q_a$, $Q_b$; $22_A$, $22_B$) function as a voltage follower circuit with respect to direct current voltage on the first and second lines (A, B) whereby the DC voltage is fed back to the first and second reference resistances ($R_{F1}$, $R_{F2}$; $R_{FA}$, $R_{FB}$) by means of DC positive feedback, the first and second amplifiers ($Q_a$, $Q_b$; $22_A$, $22_B$) function as an alternating current positive feedback circuit with respect to a received voice signal between the first and second lines (A, B), whereby the received voice signal is fed back to the first and second reference resistances ($R_{F1}$, $R_{F2}$; $R_{FA}$, $R_{FB}$) by means of AC positive feedback and the first and second amplifiers ($Q_a$, $Q_b$; $22_A$, $22_B$) do not respond to a common mode signal, whereby the common mode signal is terminated to the ground through the first and second reference resistances ($R_{F1}$ $R_{F2}$; $R_{FA}$, $R_{FB}$).

14. A battery-feed circuit according to claim 10, wherein a first polarity-reversal control signal is led to the first input terminal of the first amplifier ($Q_a$, $22_A$), a second polarity-reversal control signal is led to the first input terminal of the second amplifier ($Q_b$, $22_B$) and the circuit is capable of sending a polarity-reversal signal to the first and second lines (A, B) by controlling the first and second polarity-reversal control signals.

15. A battery-feed circuit according to claim 14, wherein the circuit is capable of sending a noiseless polarity-reversal signal by inverting smoothly the polarity of the first and second polarity-reversal control signals.

16. A battery-feed circuit according to claim 10, wherein the circuit further comprises a circuit for applying a sending voice signal ($V_s$) between the first input terminals of the first and second amplifiers ($Q_a$, $Q_b$; $22_A$, $22_B$), whereby the circuit is capable of sending the voice signal to the first and second lines (A, B).

17. A battery-feed circuit according to claim 10, wherein the circuit is constituted so that the circuits of the first and second lines (A, B) are completely symmetrical with each other.

**Patentansprüche**

1. Batterie-Speiseschaltung für eine Vermittlungsanlage, bei der ein zwischen ersten und zweiten Leitungen (A, B) auftretendes Wechselspannungssignal zu ersten ersten und zweiten für jede der ersten und zweiten Leitungen (A, B) vorgesehen Bezugswiderständen ($R_{F1}$, $R_{F2}$; $R_{FA}$, $R_{FB}$) durch einen differenzverstärkenden Pfad ($Q_a$, $Q_b$; 21, $5_A$, $5_B$; $22_A$, $22_B$, $5_A$, $5_B$) mittels Wechselspannungsrückkopplung zurückgeführt wird; und

Gleichspannung auf der ersten Leitung (A) durch den ersten Bezugswiderstand ($R_{F1}$, $R_{FA}$) mittels Gleichspannungsrückkopplung zurückgeführt wird,

dadurch gekennzeichnet, daß die Gleichspannung auf der zweiten Leitung (B) unabhängig von der ersten Leitung (A) durch den zweiten Bezugswiderstand ($R_{F2}$, $R_{FB}$) mittels Gleichspanningsrückkopplung zurückgeführt wird, um einen gewünschten Wechselspannungsabschlußwiderstand und einen gewünschten Gleichspannungswiderstand auf jeder Leitung unabhängig vorzusehen.

2. Batterie-Speiseschaltung nach Anspruch 1, dadurch gekennzeichnet, daß die Gleichspannungsrückklopplung durch erste und zweite Gleichspannungsrückklopplungsschaltungen bewirkt wird, die für jede der ersten und zweiten Leitungen (A, B) vorgesehen sind.

3. Batterie-Speiseschaltung nach Anspruch 1, dadurch gekennzeichnet, daß die Wechselspannungsrückkoplung durch einen gemeinsam für die ersten und zweiten Leitungen (A, B) vorgesehenen Differenzverstärker (21) bewirkt wird.

4. Batterie-Speiseschaltung nach Anspruch 1, dadurch gekennzeichnet, daß die Wechselspannungsrückkopplung durch erste und zweite für jede der ersten und zweiten Leitungen (A, B) vorgesehen Differenverstärker ($Q_a$, $Q_b$; $22_A$, $22_B$) bewirkt wird.

5. Batterie-Speiseschaltung nach Anspruch 1, dadurch gekennzeichnet, daß die Schaltung weiter erste und zweite Polarität-Umkehrsteuerschaltungen ($30_A$, $30_B$) zum Eingeben eines Polarität-Umkehrsteuersignals an die ersten und zweite Gleichspannungsrückklopplungsschaltungen enthält, wodurch die Schaltung das Polarität-Umkehrsignal an die ersten und zweiten Leitungen (A, B) zu senden vermag.

6. Batterie-Speiseschaltung nach Anspruch 5, dadurch gekennzeichnet, daß die Schaltung ein rauschloses Polarität-Umkehrsignal durch gleichmäßiges Umkehren der Polarität des ersten und zweiten Polarität-Umkehrsteuersignals zu senden vermag.

7. Batterie-Speiseschaltung nach Anspruch 1, dadurch gekennzeichnet, daß die Schaltung weiter eine Schaltung ($V_s$) zum Zuführen eines sendenden Sprechsignals für die ersten und zweiten Bezugswiderstände enthält, wodurch die Schaltung das Sprechsignal an die ersten und zweiten Leitungen (A, B) zu senden vermag.

8. Batterie-Speiseschaltung nach Anspruch 1, dadurch gekennzeichnet, daß die Wechselspannungsrückkopplung und die Gleichspannungsrückklopplung durch ein für die ersten und zweiten Leitungen vorgesehenes Paar von Operationsverstärkern ($Q_a$, $Q_b$; $22_A$, $22_B$) bewirkt werden.

9. Batterie-Speiseschaltung nach Anspruch 5, dadurch gekennzeichnet, daß die Wechselspannungsrückkoplung, die Gleichspannungsrückklopplung und die Polarität-Umkehrsteuerung durch ein für die ersten und zweiten Leitungen vorgesehenes Paar von Operationsverstärkern ($Q_a$, $Q_b$) bewirkt werden.

10. Batterie-Speiseschaltung für eine Vermittlungsanlage, mit
einem ersten mit einer ersten Leitung (A) verbundenen Bezugswiderstand ($R_{F1}$, $R_{FA}$);
einem zweiten mit einer zweiten Leitung (B) verbunden Bezugswiderstand ($R_{F2}$, $R_{FB}$);
einem ersten Verstärker ($Q_a$, $22_A$) zum Zuführen eines Sprechstroms für die erste Leiting (A);
einem ersten Kondensator ($C_{c1}$; $20_A$) zum Verbinden der ersten Leitung (A) mit einem zweiten Eingangsanschluß des ersten Verstärkers ($Q_a$; $22_A$);
gekennzeichnet durch Führen eines Anschlusses des ersten Verstärkers ($Q_a$; $22_A$) zu der ersten Leitung (A);
einen zweiten Verstärker ($Q_b$; $22_B$) zum Zuführen des Sprechstroms für die zweite Leitung (B), dessen erster Eingangsanschluß zu der zweiten Leitung (B) geführt ist; und
einen zweiten Kodensator ($C_{c2}$; $20_B$) zum Verbinden der ersten Leitung (A) mit einem zweiten Eingangschluß des zweiten Verstärkers ($Q_b$; $22_B$).

11. Batterie-Speiseschaltung nach Anspruch 10, dadurch gekennzeichnet, daß die ersten und zweiten Verstärker ($Q_A$, $Q_B$; $22_A$, $22_B$) Operationsverstärker sind.

12. Batterie-Speiseschaltung nach Anspruch 10, dadurch gekennzeichnet, daß die ersten Eingangsanschlüsse von ersten und zweiten Verstärkern ($Q_a$, $A_b$; $22_A$, $22_B$) nicht-invertierende Eingangsanschlüsse und deren zweite Eingangsanschlüsse invertierende Eingangsanschlüsse sind.

13. Batterie-Speiseschaltung nach Anspruch 12, dadurch gekennzeichnet, daß die Schaltung derart ausgebildet ist, daß die ersten und zweiten Verstärker ($Q_a$, $Q_b$; $22_A$, $22_B$) als eine in Bezug auf die Gleichspannung auf den ersten und zweiten Leitungen (A, B) spannungsfolgende Schaltung arbeiten, wodurch die Gleichspannung an die ersten und zweiten Bezugswiderstände ($R_{F1}$, $R_{F2}$; $R_{FA}$, $F_{FB}$) mittels positiver Gleichspannungsrückkopplung zurückgeführt wird, die ersten und zweiten Verstärker ($Q_a$, $Q_b$; $22_A$, $22_B$) als eine positive Rückklopplungswechselspannungschaltung in Bezug auf ein empfangenes Sprechsignal zwischen den ersten und zweiten Leitungen (A, B) arbeiten, wodurch das empfangene Sprechsignal zu den ersten und zweiten Bezugswiderständen ($R_{F1}$, $R_{F2}$; $R_{FA}$, $F_{FB}$) mittels positiver Wechselspannungsrückkopplung zurückgeführt wird und die ersten und zweiten Verstärker ($Q_a$, $Q_b$; $22_A$, $22_B$) auf eine gemeinsames Modus-Signal nicht ansprechen, wodurch das gemeinsame Modus-Signal durch die ersten und zweiten Bezugswiderstände ($R_{F1}$, $R_{F2}$; $R_{FA}$, $R_{FB}$) auf Erdpotential abgeschlossen wird.

14. Batterie-Speiseschaltung nach Anspruch 10, dadurch gekennzeichnet, daß ein erstes Polarität-Umkehrsteuersignal dem ersten Eingangsanschluß des ersten Verstärkers ($Q_a$; $22_A$) zugeführt wird, ein zweites Polarität-Umkehrsteuersignal dem ersten Eingangsanschluß des zweiten Verstärkers ($Q_b$; $22_B$) zugeführt wird, und die Schaltung ein Polarität-Umkehrsignal an die ersten und zweiten Leitungen (A, B) durch Steuern der ersten und zweiten Polarität-Umkehrsteuersignale zu senden vermag.

15. Batterie-Speiseschaltung nach Anspruch 14, dadurch gekennzeichnet, daß die Schaltung ein rauschloses Polarität-Umkehrsignal durch gleichmäßiges Umkehren der Polarität der ersten und zweiten Polarität-Umkehrsteuersignale zu senden vermag.

16. Batterie-Speiseschaltung nach Anspruch 10, dadurch gekennzeichnet, daß die Schaltung weiter eine Schaltung zum Anlegen eines sendenden Sprechsignals ($V_s$) zwischen den ersten Eingangsanschlüssen der ersten und zweiten Verstärker ($Q_a$, $Q_b$; $22_A$, $22_B$) enthält, wodurch die Schaltung das Sprechsignal an die ersten und zweiten Leitungen (A, B) zu senden vermag.

17. Batterie-Speiseschaltung nach Anspruch 10, dadurch gekennzeichnet, daß die Schaltung derart ausgebildet ist daß die Schaltungen der ersten und zweiten Leitungen (A, B) vollständig symmetrisch zueinander sind.

**Revendications**

1. Circuit d'alimentation pour un central, dans lequel un signal de courant alternatif apparaissant entre des première et seconde lignes (A, B) est réinjecté dans des première et seconde résistances de référence

EP 0 186 214 B1

($R_{F1}$, $R_{F2}$; $R_{FA}$, $R_{FB}$) prévues pour chacune des première et seconde lignes (A, B) au travers d'une voie d'amplification différentielle ($Q_a$, $Q_b$; 21, $5_A$, $5_B$; $22_A$, $22_B$, $5_A$, $5_B$) au moyen d'une réaction courant alternatif; et

une tension de courant continu sur la première ligne (A) est réinjectée au travers de la première résistance de référence ($R_{F1}$, $R_{FA}$) au moyen d'une réaction de courant continu;

caractérisé en ce que la tension de courant continu sur la seconde ligne (B) est réinjectée indépendamment de la première ligne (A) au travers de la seconde résistance de référence ($R_{F2}$, $R_{FB}$) au moyen d'une réaction de courant continu pour fournir une résistance de bouclage de courant alternatif souhaitée et une résistance de courant continue souhaitée indépendamment sur chaque ligne.

2. Circuit d'alimentation selon la revendication 1, dans lequel la réaction de courant continu est effectué par des premier et second circuits de réaction de courant continu prévus pour chacune des première et seconde lignes (A, B).

3. Circuit d'alimentation selon la revendication 1, dans lequel la réaction de courant alternatif est effectué par un amplificateur différentiel (21) prévu en commun pour les première et seconde lignes (A, B).

4. Circuit d'alimentation selon la revendication 1, dans lequel la réaction de courant alternatif est effectuée par des premier et second amplificateurs différentiels ($Q_a$, $Q_b$; $22_A$, $22_B$) prévus pour chacune des première et seconde lignes (A, B).

5. Circuit d'alimentation selon la revendication 1, dans lequel le circuit comprend outre les premier et second circuits de commande d'inversion de polarité ($30_A$, $30_B$) pour introduire un signal de commande d'inversion de polarité dans les premier et second circuits de réaction de courant continu, de façon que le circuit soit capable d'envoyer le signal d'inversion de polarité aux première et secondes lignes (A, B).

6. Circuit d'alimentation selon la revendication 5, dans lequel le circuit est capable d'envoyer un signal d'inversion de polarité sans bruit en inversant lentement la polarité des premier et second circuits de commande d'inversion de polarité.

7. Circuit d'alimentation selon la revendication 1, dans lequel le circuit comprend en outre un circuit ($V_s$) pour fournir un signal vocal aux première et seconde résistances de référence, de façon que le circuit soit capable d'envoyer le signal vocal aux première et seconde lignes (A, B).

8. Circuit d'alimentation selon la revendication 1, dans lequel la réaction de courant alternatif et la réaction de courant continu sont effectuées par une paire d'amplificateurs opérationnels ($Q_a$, $Q_b$; $22_A$, $22_B$) prévues pour les première et seconde lignes.

9. Circuit d'alimentation selon la revendication 5, dans lequel la réaction de courant alternatif, la réaction de courant continu et la commande d'inversion de polarité sont effectuées par une paire d'amplificateurs opérationnels ($Q_a$, $Q_b$) prévues pour les première et seconde lignes.

10. Circuit d'alimentation pour un central comprenant:

une première résistance de référence ($R_{A1}$, $R_{FA}$) reliée à une première ligne (A);

une seconde résistance de référence ($R_{F2}$, $R_{FB}$) reliée à une seconde ligne (B);

une premier amplificateur ($Q_a$, $22_A$) pour fournir un courant de trafic pour la première ligne (A);

une premier capacité ($C_{c1}$; $20_A$) pour coupler la seconde ligne (B) et une seconde borne d'entrée du premier amplificateur ($Q_a$; $22_A$);

caractérisé par une première borne du premier amplificateur ($Q_a$; $22_A$) qui est relié à la première ligne (A);

un second amplificateur ($Q_b$; $22_B$) pour fournir le courant de trafic pour la seconde ligne (B), une première borne d'entrée reliée à la seconde ligne (B); et

une seconde capacité ($C_{c2}$; $20_B$) pour coupler la première ligne (A) et une seconde borne d'entrée du second amplificateur ($Q_b$; $22_B$).

11. Circuit d'alimentation selon la revendication 10, dans lequel les premier et second amplificateurs ($Q_a$, $Q_b$; $22_A$, $22_B$) sont des amplificateurs opérationnels.

12. Circuit d'alimentation selon la revendication 10 dans lequel les premières bornes d'entrées des premier et second amplificateurs ($Q_a$, $A_b$; $22_A$, $22_B$) sont des bornes d'entrée non inversées et les secondes bornes d'entrée de ceux-ci sont des bornes d'entrée inversées.

13. Circuit d'alimentation selon la revendication 12 dans lequel le circuit est constitué de façon que les premier et second amplificateurs ($Q_a$, $Q_b$; $22_A$, $22_B$) fonctionnement comme un circuit suiveur de tension par rapport à la tension de courant continu sur les première et seconde lignes (A, B) de façon que la tension de courant continu soit réinjectée dans les première et seconde résistances de référence ($R_{F1}$, $R_{F2}$; $R_{FA}$, $F_{FB}$) au moyen d'une réaction positive de courant continu, les premier et second amplificateurs ($Q_a$, $Q_b$; $22_A$, $22_B$) fonctionnent comme un circuit de réaction positive de courant alternatif par rapport au signal vocal reçu entre les première et seconde lignes (A, B) de façon que le signal vocal reçu soit réinjecté dans les première et seconde résistances de référence ($R_{F1}$, $R_{F2}$; $R_{FA}$, $R_{FB}$) au moyen d'une réaction positive de courant alternatif et les premier et second amplificateurs ($Q_a$, $Q_b$; $22_A$, $22_B$) ne répondent pas à un signal en mode commun, de façon que le signal en mode commun soit amené à la masse par l'ntermédiaire des première et seconde résistances de référence ($R_{F1}$, $R_{F2}$; $R_{FA}$, $R_{FB}$).

14. Circuit d'alimentation selon la revendication 10, dans lequel un premier signal de commande d'inversion de polarité est relié à la première borne d'entrée du premier amplificateur ($Q_a$, $Q_A$), un second signal de commande d'inversion de polarité est relié à la première borne d'entrée du second amplificateur ($Q_b$, $22_B$) et le circuit est capable d'envoyer un signal d'inversion de polarité aux première et seconde lignes

9

(A, B) en commandant les premier et second signaux de commande d'inversion de commande de polarite.

15. Circuit d'alimentation selon la revendication 14, dans lequel le circuit est capable d'envoyer un signal d'inversion de polarité sans bruit en inversant lentement la polarité des premier et second signaux de commande d'inversion de polarité.

16. Circuit d'alimentation selon la revendication 10, dans lequel le circuit comprend en outre un circuit pour fournir un signal vocal d'envoi ($V_s$) entre les premières bornes d'entrée des premier et second amplificateurs ($Q_a$, $22_A$), de façon que le circuit soit capable d'envoyer le signal aux première et second lignes (A, B).

17. Circuit d'alimentation selon la revendication 10, dans lequel le circuit est constitué de façon que les circuits de première et seconde lignes (A, B) soient complètement symétriques l'un par rapport à l'autre.

EP 0 186 214 B1

# Fig. 1

1

# Fig. 2

# Fig. 3

# Fig. 4

3

Fig. 5

4

Fig. 6